# EUROPEAN PATENT SPECIFICATION

(11) **EP 1 666 347 B1**
(45) Date of publication and mention of the grant of the patent: **18.01.2012**
(21) Application number: 05026033.0
(22) Date of filing: 29.11.2005
(51) Int. Cl.: B62K 25/08, F16F 9/34

(54) **Suspension device for vehicle**
Fahrzeugaufhängungsvorrichtung
Dispositif de suspension pour véhicule

(30) Priority: 06.12.2004 JP 2004352360
(43) Date of publication of application: 07.06.2006
(73) Proprietor: Yamaha Hatsudoki Kabushiki Kaisha, Iwata-shi, Shizuoka-ken (JP)
(72) Inventor: Fukuda, Hiromi, Iwata-shi Shizuoka-ken (JP)
(74) Representative: Grünecker, Kinkeldey, Stockmair & Schwanhäusser

(56) References cited:
- GB-A- 2 350 411
- US-A- 6 155 391
- US-A1- 2004 200 946

## Description

This invention relates to a vehicle suspension device according to the preamble of independent claim 1.

Such a suspension device for a vehicle can be taken from prior art document GB 2 350 411 A. Said prior art document discloses a damper for automobile suspensions with an adjustable damping force. The damper comprises an elongated tubular pressure cylinder in which a reciprocal movable piston is accommodated. The pressure cylinder is connected to a wheel of the vehicle and the piston is connected to a vehicle body side of the automobile via the piston rod. Said piston is provided with one bidirectional flow valve or with a pair of unidirectional valves in order to provide fluid communication between the two chambers of the cylinder. Said cylinder is also surrounded by a so-called rebound transfer tube providing a rebound transfer volume and is surrounded by a reservoir tube providing a fluid reservoir. Said reservoir tube is supporting a compression valve and a rebound valve both provided with electric solenoids for changing a flow of damping fluid rate. The compression valve and rebound valve are respectively provided with a bleed disc. Said bleed discs respectively provide a bypass flow for damping fluid by a slot formed in said bleed discs in addition to the valve members provided in the piston. Said bleed discs are arranged at an upstream position with regard to the compression valve and the rebound valve.

One of conventional dampers used in suspension devices of this type is disclosed in JP 06-263078 A, for example. The conventional suspension device damper disclosed in JP 06-263078 A is provided in one of cylinders of a front fork of a motorcycle and is provided with a hydraulic damper mechanism mounted between a motorcycle body part and a wheel part and an actuator for adjusting a damping force of the damper mechanism.

The damper mechanism has a hydraulic cylinder, a valve with an orifice provided inside the hydraulic cylinder, a piston, and the like.

The actuator is so constituted as to control the damping force of the damper mechanism based on a change in stroke amount detected by a stroke sensor provided in the other one of the cylinders of the front fork.

An adjustable damping force control valve having a structure of biasing the valve by a solenoid in a direction that the valve is closed is usually used for controlling the damping force of the thus-constituted damper for suspension device. In this case, since a value of a current to be supplied to the solenoid is changed (biasing force is changed) to change the damping force, it is possible to control the damping force in response to a degree or a frequency of vibration of a vehicle.

However, the above-described adjustable damping force control valve has had a problem in damping a subtle vibration which is caused when a wheel hops over small bumps or a small step on a road surface, i.e. a vibration having a relatively high frequency. In order to damp the vibration in high frequency region of this kind, it is necessary to improve responsiveness of a valve plug in such a fashion that the valve plug follows the vibration and to use a control device with a higher signal processing speed. That is, with the use of such highly responsive valve plug and high speed control device, the production cost is remarkably increased.

It is an object of the present invention to provide a suspension device for a vehicle as indicated above, which ensures high damping performance by means of a simple and reliable structure.

According to the present invention, said objective is solved by a suspension device for a vehicle having the features of independent claim 1. Preferred embodiments are laid down in the dependent claims.

Further, preferably there is also provided a motorcycle on which the suspension device of the above embodiments is mounted, comprising a steering handle axially supported by a motorcycle frame and a bridge fixed to an axial support shaft of the steering handle and connecting and supporting the outer tubes of the hydraulic cylinders provided on right and left hand sides, wherein the vibration damping unit is provided in at least one of the hydraulic cylinders.

In the following, the present invention is explained in greater detail with respect to several embodiments thereof in conjunction with the accompanying drawings, wherein:
- Fig. 1: is a front view showing a motorcycle front fork 1 with a vehicle suspension device damper according to an embodiment,
- Fig. 2: is a longitudinal sectional view showing a fork main body on a right hand side of the motorcycle,
- Fig. 3: is a longitudinal sectional view showing a fork main body on a left hand side of the motorcycle,
- Fig. 4: is a sectional view showing a damping force control valve,
- Fig. 5: is a plan view of an axle holder,
- Fig. 6: is a graph showing a relationship between a piston speed and a damping force,
- Fig. 7: is a diagram showing a hydraulic circuit of the suspension device according to this embodiment,

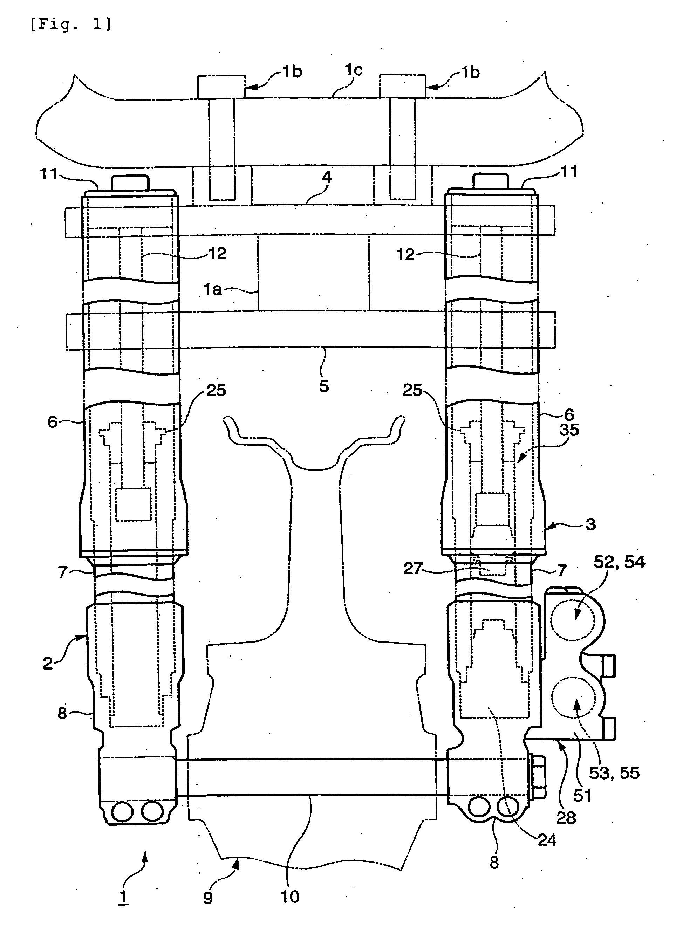

Hereinafter, one embodiment of a vehicle suspension device will be described in detail with reference to Figs. 1 to 6.

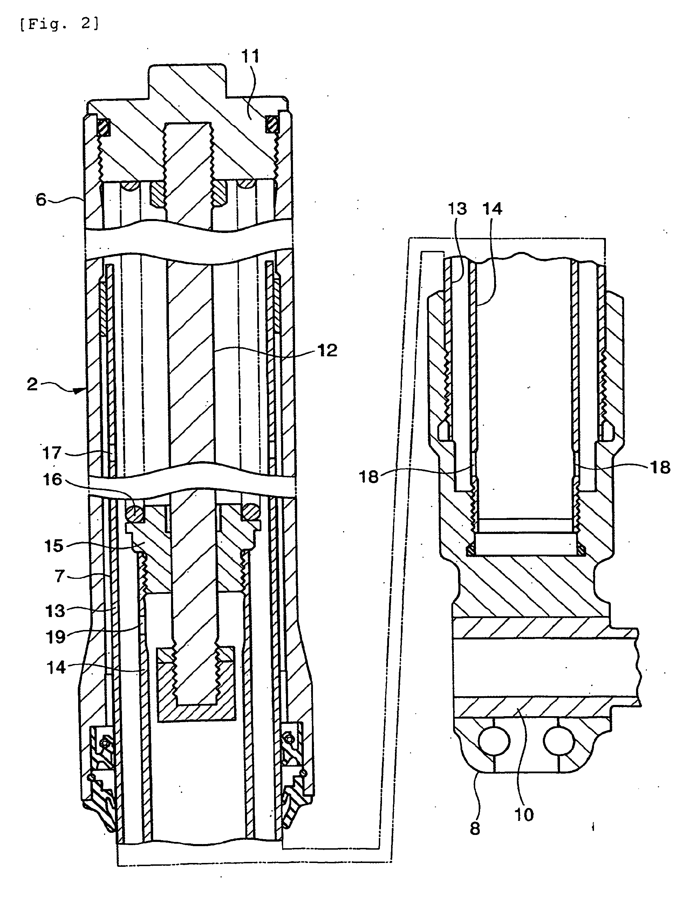

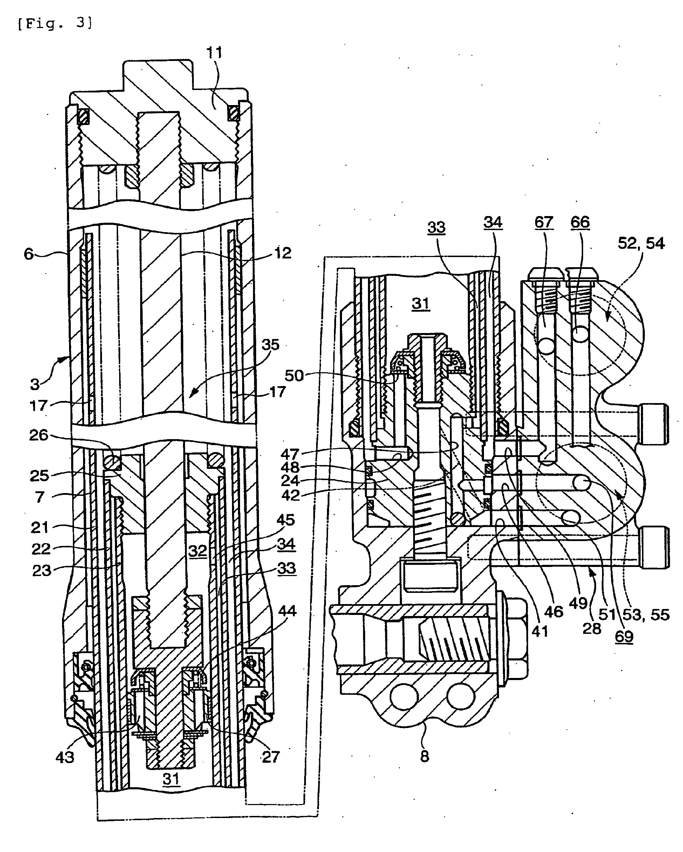

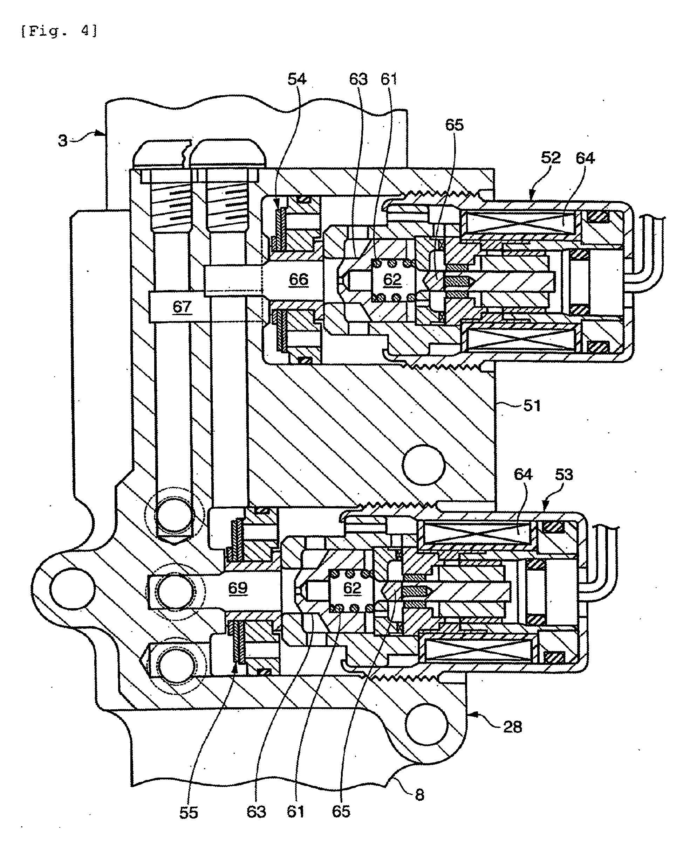

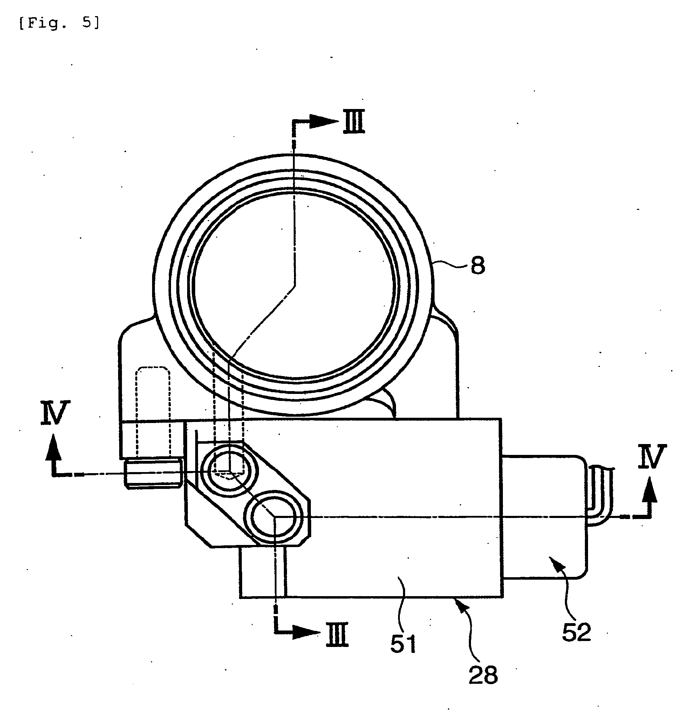

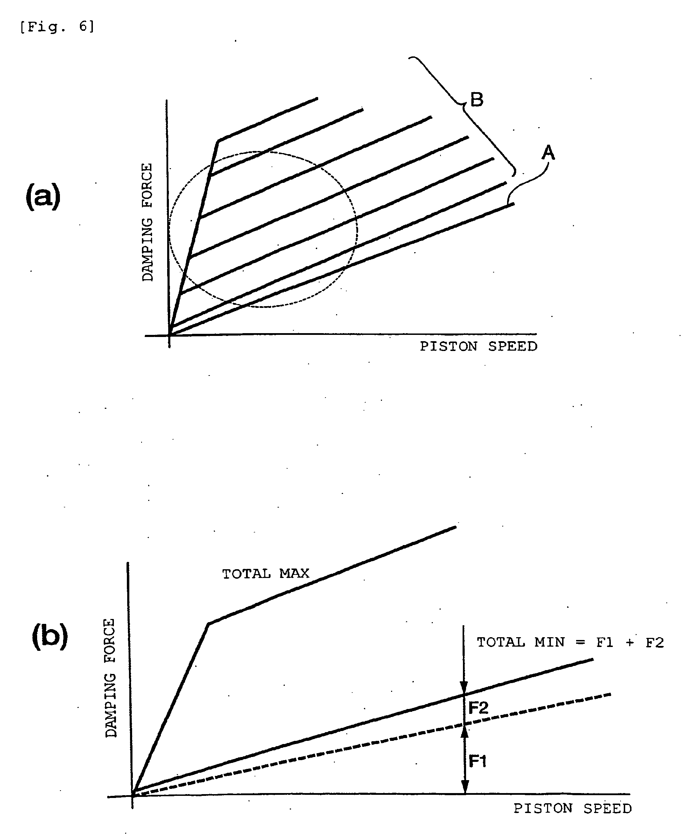

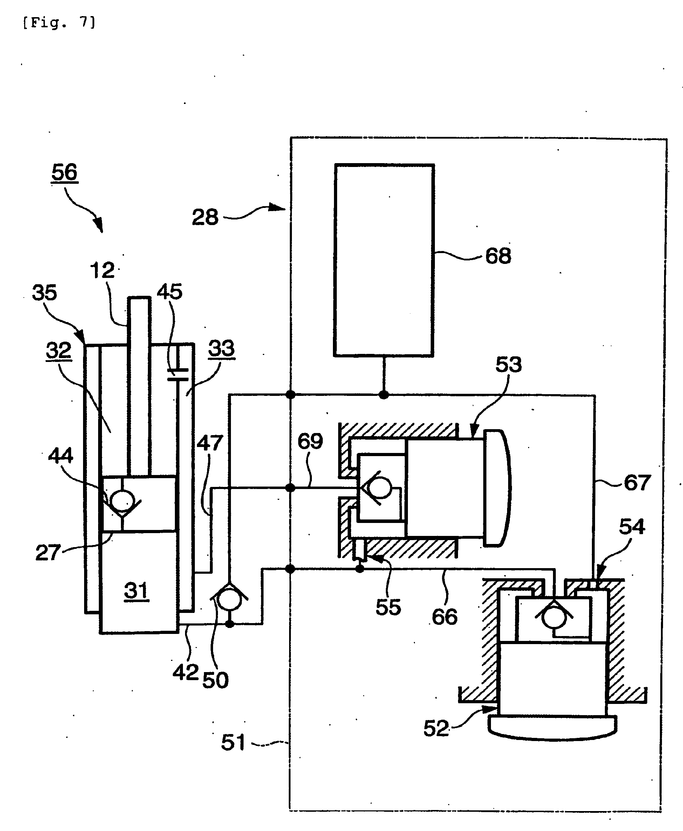

Fig. 1 is a front view showing a motorcycle front fork as a vehicle suspension device according to this embodiment; Fig. 2 is a longitudinal sectional view showing a fork main body on a right hand side of the motorcycle; Fig. 3 is a longitudinal sectional view showing a fork main body on a left hand side of the motorcycle; Fig. 4 is a sectional view showing a damping force control valve; Fig. 5 is a plan view of an axle holder; Fig. 6 is a graph showing a relationship between a piston speed and a damping force; and Fig. 7 is a diagram showing a hydraulic circuit of the suspension device according to this embodiment.

In these drawings, a motorcycle front fork according to this embodiment is denoted by a reference number 1. The front fork 1 is provided with a fork main body 2 which is positioned on a right hand side (left hand side in Fig. 1) of the motorcycle, a fork main body 3 on the right hand side of the motorcycle, a top bridge 4 and a bottom bridge 5 for connecting the fork main bodies 2 and 3 to each other, and the like. The top bridge 4 and the bottom bridge 5 are fixed to an upper end part and a lower end part of a spindle (not shown) supported rotatably by a head pipe denoted by a reference number 1a in Fig. 1. A steering handle 1 c is attached to an upper part of the top bridge 4 by a clamp member 1b.

The front fork 1 is a so-called handstand type, and an inner tube 7 is movably fitted into an opening at a lower end of an outer tube 6 supported by the top bridge 4 and the bottom bridge 5. The front fork 1 supports an axle 10 of a front wheel 9 via an axle holder 8 provided at a lower end part of the inner tube 7. Only a wheel part of the front wheel 9 is shown in Fig. 1. The outer tube 6 and the inner tube 7 form a cylinder defined in this embodiment.

A cover member 11 is attached to an upper end part of the outer tube 6 as shown in Figs. 2 and 3. A rod 12 extending downward inside the outer tube 6 is attached to the cover member 11.

The inner tube 7 is mounted in such a fashion as to extend upward from te the axle holder 8.

As shown in Fig. 2, the inner tube 7 of the fork main body 2 at the motorcycle right hand side has a first cylinder 13 fitted with the outer tube 6 and a second cylinder 14 positioned inward of the first cylinder 13. A support member 15 movably supporting a lower end part of the rod 12 is attached to an upper end part of the second cylinder 14. The lower end part of the rod 12 is inserted into the second cylinder 14 in such a fashion that the lower end part is fitted into the inside with a gap. A suspension spring 16 on the right hand side of the motorcycle is elastically mounted between the support member 15 and the cover member 11.

A continuous hole 17 is formed at an upper end part of the first cylinder 13, and continuous holes 18 and 19 are separately formed at end parts of the second cylinder 14. By thus forming the continuous holes 17 to 19 on the cylinders 13 and 14, it is possible to form a closed space in the fork main body 2 on the right hand side of the motorcycle. In this embodiment, a hydraulic oil is charged into the space.

As shown in Fig. 3, the inner tube 7 of the fork main body 3 on the left hand side of the motorcycle is provided with a first cylinder 21 to be fitted into the outer tube 6 and second and third cylinders 22 and 23 positioned inward of the first cylinder 21. Lower end parts of the second and the third cylinders 22 and 23 are supported by a supporting block 24 mounted inside the axle holder 8. A support member 25 for movably supporting the rod 12 is attached to upper end parts of the second and third cylinders 22 and 23. A suspension spring 26 on the left hand side of the motorcycle is elastically mounted between the support member 25 and the cover member 11. A piston 27 to be fitted to an inner peripheral surface of the third cylinder 23 is provided on a lower end part of the rod 12.

The hydraulic oil is charge into the thus-constituted fork main body 3 on the left hand side of the motorcycle. Though this is not depicted in the drawings, a space formed above an oil surface of the hydraulic oil inside the fork main body 3 is filled with a high pressure gas. The hydraulic oil fills oil chambers which are formed in the fork main body 3 and described later in this specification, and oil passages formed on the axle holder 8, so that a pressure is transmitted to a damping force control device 28 (see Figs. 3 to 5) which is mounted on the axle holder 8 and described later in this specification.

As used herein, the oil chambers formed inside the inner tube 7 on the left hand side of the motorcycle means the first chamber 31 formed at a position inward of the third cylinder 23 and below the piston 27, the second oil chamber 32 formed at a position inward of the third cylinder 23 and above the piston 27, and the third oil chamber 33 formed between the second cylinder 22 and the third cylinder 23 and having a cylindrical shape, and the fourth oil chamber 34 formed at a position inward of the first cylinder 21 and outward from the second cylinder 22. The inner tube 7 forming the chambers 31 to 34, the axle holder 8, the supporting block 24, and the support member 25, the rod 12, and the piston 27 form a hydraulic cylinder 35 of this embodiment.

The first oil chamber 31 is connected to a first continuous hole 41 opened at an outer part of the axle holder 8 via an oil passage 42 inside the supporting block 24 as well as to the second oil chamber 32 via an oil passage 43 formed in the piston 27. The oil passage 43 is provided with a check valve 44 for feeding the hydraulic oil only from the first oil chamber 31 to the second oil chamber 32.

The second oil chamber 32 is connected to the third oil chamber 33 via a continuous hole 45 formed at an upper end part of the third cylinder 23. The third oil chamber 33 is connected to a second continuous hole 46 opened at the outer part of the axle holder 8 via an oil passage 47.

The fourth oil chamber 34 is connected to the first oil chamber 31 via an oil passage 48 formed in the supporting block 24 as well as to a third continues hole 49 opened at the outer part of the axle holder 8. The oil passage 48 is provided with a check valve 50 for feeding the hydraulic oil only from the fourth oil chamber 34 to the first oil chamber 31.

An oil passage of the damping force controlling device 28 which will be described later in this specification is connected to each of the first to the third continuous holes 41, 46, and 49.

The damping force controlling device 28 generates a damping force when the front fork 1 is compressed or extended by reducing a sectional area of an oil passage on which the hydraulic oil is fed. As shown in Figs. 3, 4, and 7, the damping force controlling device 28 is provided with a valve housing 51 attached to the axle holder 8, a pair of adjustable damping force control valves 52 and 53 disposed inside the valve housing 51, vibration damping unit 54 and 55 formed of a pair of fixed diaphragms, and the like. A suspension device 56 (see Fig. 7) according to this invention is constituted of the adjustable damping force control valves 52 and 53, the vibration damping unit 54 and 55, the above-described hydraulic cylinder 35, and the like.

The pair of adjustable damping force control valves 52 and 53 is assembled to the valve housing 51 so as to be arranged along a vertical direction and in such a fashion that an axial direction is oriented longitudinally (horizontally in Fig. 4) with respect to the motorcycle, as shown in Fig. 4. The computerized control valves 52 and 53 are provided with a valve plug 63 biased in a closing direction by an elastic force of a compressed coil spring 61 and a hydraulic pressure of a pilot pressure chamber 62 and with a pilot valve 65 for changing the pressure of the pilot pressure chamber 62 in response to a biasing force of a solenoid 64. Operation of the solenoid 64 is so controlled by a control device (not shown) as to open/close the pilot valve 65 in such a manner that an artificially or automatically set damping force is generated.

Any expensive component part which particularly improves responsiveness is not used for the adjustable damping force control valves 52 and 53, and the adjustable damping force control valves 52 and 53 are assembled by using cheap component parts produced in large scale.

Of the adjustable damping force control valves 52 and 53, the adjustable damping force control valve 52 which is positioned above the other one in Fig. 4 opens and closes an oil passage for pressure conduction in compression 66 formed inside the valve housing 51. An end of the compression pressure conduction oil passage 66 on the upstream part is connected to the first continuous hole 41 of the axle holder 8.

A hydraulic oil returning oil passage 67 is connected to a position downstream of the damping force control valve 52 connected via the vibration damping unit 54 in the compression pressure conduction oil passage 66. In this embodiment, the first vibration damping unit of this invention is constituted of the vibration damping unit 54. A downstream side end of the hydraulic oil returning oil passage 67 is connected to the third continuous hole 49 of the axle holder 8. The third continuous hole 49 is so depicted as to form an entrance of an accumulator 68 in Fig. 7. The accumulator 68 is formed of the upper end part of the fork main body 3 on the left hand side of the motorcycle in actuality.

Referring to Fig. 4, the adjustable damping force control valve 53 positioned on the lower side opens and closes an extension pressure conduction oil passage 69 formed inside the valve housing 51. The upper end of the extension conduction oil passage 69 is connected to the second continuous hole 46 of the axle holder 8. The compression pressure conduction oil passage 66 is connected to the downstream of the damping force control valve 53 in the extension pressure conduction oil passage 69 via the vibration damping unit 55. In this embodiment, the vibration damping unit 55 forms the second vibration damping unit of this embodiment.

The pair of vibration damping unit 54 and 55 is used for damping a vibration in frequency region which is not damped by the adjustable damping force control valves 52 and 53. As shown in Fig. 4, the vibration damping units 54 and 55 have a simple structure that a plurality of disks formed of a spring material and different in outer diameter are piled up on an identical axial line. The frequency region of vibration that the vibration damping units 54 and 55 can damp is set to that higher than a frequency region to be damped by the adjustable damping force control valves 52 and 53. In this embodiment, the dampable vibration frequency of the adjustable damping force control valves 52 and 53 is set to about 10 Hz or less, and the dampable vibration frequency of the vibration damping units 54 and 55 is set to about 10 Hz to 20 Hz. The damping force generated by the vibration damping units 54 and 55 according to this embodiment is set to that higher than a lowest damping force F2 generated by the adjustable damping force control valves 52 and 53 in almost all ranges of an ordinary piston speed region (ordinarily 0.02 to 0.6 m/sec).

In the suspension device 56 having the constitution described above, in the case where the front fork 1 is compressed, a hydraulic pressure is transmitted from the first oil chamber 31 to the upper adjustable damping force control valve 52 and the vibration damping unit 54 via the oil passage 42 in the supporting block 24, the first continuous hole 41, and the compression conduction oil passage 66. In turn, in the case where the front fork 1 is extended, a hydraulic pressure is transmitted from the second oil chamber 32 to the lower adjustable damping force control valve 53 and the vibration damping unit 55 via the continuous hole 45, the third oil chamber 33, the oil passage 47 in the supporting block 24, the second continuous hole 46, and the extension conduction oil passage 69.

Therefore, it is possible for the suspension device 56 to generate a damping force in both of the cases of compression and extension of the front fork 1 and to damp the vibration at a motorcycle frame with respect to the front wheel 9. In this case, a vibration generated when the overall motorcycle moves vertically at a relatively low speed (vibration above the springs) at the time of, for example, braking, i.e. a vibration which is generated at the parts positioned above the suspension springs 16 and 26 in the motorcycle and is in a relatively low frequency region, for example, is damped by the damping force generated by the adjustable damping force control valves 52 and 53.

Also, a vibration (vibration below the springs) generated when the front wheel 9 hops over small bumps or a small step on the road surface, i.e. a vibration which is generated at the parts positioned below the suspension springs 16 and 26 in the motorcycle and is in a relatively high frequency region, is damped by the damping force generated by the vibration damping units 54 and 55. As shown in Fig. 6(a), the damping force generated by the suspension device 56 is gradually increased with an increase in speed (piston speed) at which the piston 27 moves toward the inner tube 7.

Referring to Fig. 6(a), a change in damping force generated by the vibration damping units 54 and 55 is indicated by A, and a change in damping force generated by the adjustable damping force control valve is indicated by B. Since the damping force of the adjustable damping force control valves 52 and 53 changes corresponding to the size of the current supplied to the solenoid 64, plural lines are used for indicating the damping force characteristics. A dash line circle in Fig. 6(a) indicates a range required for damping the so-called vibration above springs.

As shown in Fig. 6, it is understood that the vibration below springs, which is in the high frequency region and requires the relatively low damping force, is damped by the vibration damping units 54 and 55.

With the vehicle suspension device 56 according to this embodiment, the vibration region having high frequency which is generated when the wheel hops over small bumps and a small step on a road is damped by the vibration damping units 54 and 55 formed of the dedicated fixed diaphragms; therefore, the adjustable damping force control valves 52 and 53 damp only the relatively low frequency. As a result, it is possible to use component parts which mainly damp the vibration in relatively low frequency region, i.e. component parts which are simple and low price, for the adjustable damping force control valves 52 and 53.

Thus, the motorcycle suspension device 56 according to this embodiment achieves both of the cost reduction and the damping of the vibration in high frequency region.

Though the suspension device according to the above-described embodiments is the front fork 1 of a motorcycle in the embodiment, the suspension device can be formed of a front fork of other types of vehicles and can be applied to a rear wheel suspension device of a motorcycle, for example.

In the case of applying the teaching of the above embodiment to the rear wheel suspension device, a constitution similar to that of the embodiment will be employed. That is, in realizing such rear wheel suspension device, the damping force control device 28 described in the embodiment is assembled to a hydraulic cylinder of a rear cushion unit.

The description above discloses (amongst others) an embodiment of a vehicle suspension device comprising a hydraulic cylinder mounted between a vehicle body and a wheel and an adjustable damping force control valve controlling a damping force by changing an amount of supplied current, the a vehicle suspension device being characterized in that: the hydraulic cylinder comprises a cylinder connected to one of the vehicle body and the wheel, a piston fitted into the cylinder, and a rod for connecting the other one of the vehicle body and the wheel to the piston; and a vibration damping unit is provided between an oil chamber defined by the piston of the cylinder and the adjustable damping force control valve.

Accordingly, since a region of vibration which is generated when a wheel hops over small bumps or a small step on the road surface and has a high frequency is damped by a dedicated fixed diaphragm, the adjustable damping force control valve damps only relatively low frequencies.

Therefore, it is possible to employ a simple and low cost adjustable damping force control valve.

This embodiment of a vehicle suspension device might be further improved in that the damping force generated by the vibration damping unit is set to a value larger than that of a minimum damping force generated by the adjustable damping force control valve.

Accordingly, it is possible to more reliably damp the vibration having high frequency by the use of the vibration damping unit.

The present vehicle suspension device might be even further improved in that: a first oil chamber on an anti-rod side and a second oil chamber on a rod side are formed in the cylinder; a first vibration damping unit is provided between the first oil chamber and the adjustable damping force control valve; and a second vibration damping unit is provided between the second oil chamber and the adjustable damping force control valve.

Accordingly, it is possible to damp both of the compression part and the damping part of the high frequency region by the use of the vibration damping unit.

In this embodiment, the vehicle suspension device might be still further improved in that: a valve housing to which the adjustable damping force control valve is attached is provided; a pressure conduction oil passage connected to the first oil chamber and the second oil chamber is formed in the valve housing; and the vibration damping unit is provided in the pressure conduction oil passage.

Accordingly, it is possible to make the constitution compact since it is possible to dispose the adjustable damping force control valve and the vibration damping unit in one valve housing.

Beneficially, the present vehicle suspension device is configured in that: the cylinder of the hydraulic cylinder comprises an outer tube and an inner tube fitted into the outer tube; a piston fitted into the inner tube and a rod for connecting the piston to the outer tube are provided; and a vibration damping unit is disposed between the oil chamber defined by the piston of the inner tube and the adjustable damping force control valve.

Accordingly, the vehicle suspension device is more suitably used for a hydraulic cylinder of a telescope type which takes a long cushion stroke.

Preferably, the present vehicle suspension device comprises a stopper member for blocking an end of the anti-rod side of the inner tube and by forming the vibration damping unit on the stopper member and the piston.

Therein preferably the vibration damping unit is formed of a spring material and is a plurality of disks different in outer diameter piled on an identical axial line.

Accordingly, it is possible to realize a simple constitution for the vibration damping unit.

The description above still further discloses an embodiment of a motorcycle on which the vehicle suspension device as discussed above is mounted, the motorcycle comprising a steering handle axially supported by a motorcycle frame and a bridge fixed to an axial support shaft of the steering handle and connecting and supporting the outer tubes of the hydraulic cylinders provided on right and left hand sides and characterized in that the vibration damping unit is provided in at least one of the hydraulic cylinders.

Accordingly, it is possible to divide a right and left pair of damping forces of a front fork in a motorcycle. Therefore, it is possible to maintain a balance in a horizontal direction in performing damping of the vibration.

According to the embodiment, in order to achieve both of a cost reduction and reliable damping of a vibration in a high frequency region, there is provided a hydraulic cylinder 35 is provided between a vehicle body and a wheel. Adjustable damping force control valves 52 and 53 which control a damping force by changing an amount of supplied current are provided. The hydraulic cylinder 35 is provided with a cylinder (inner tube 7), a piston 27 fitted into the cylinder, and a rod 12. Vibration damping units 54 and 55 are provided between oil chambers (first oil chamber 31, second oil chamber 32) partitioned by the piston 27 of the cylinder and the adjustable damping force control valves 52 and 53.

## Claims

1. Suspension device for a vehicle, comprising a hydraulic cylinder (35) mountable between a body and a wheel of the vehicle, wherein the hydraulic cylinder (35) comprises a cylinder (7), a piston (27) fitted into the cylinder (7), and a rod (12), a first oil chamber (31) is provided on an anti-rod side of the piston (27) and a second oil chamber (32,33) on a rod side of the piston (27) in the cylinder (7), the first oil chamber (31) is connected with a first control valve (52) by a first pressure conduction passage (66) and the second oil chamber (32,33) is connected with a second control valve (53) by a second pressure conduction passage (69), said first and second control valve (52,53) providing an adjustable damping force and are provided with a first and second vibration damping unit (54,55) respectively, **characterized in that**
the first vibration damping unit (54) is provided in a position downstream of the first control valve (52) and the second vibration damping unit (55) is provided in a position downstream of the second control valve (53).

2. Suspension device according to claim 1, **characterized in that** the first and second control valve (52,53) are respectively configured to control the damping force by changing an amount of supplied current.

3. Suspension device according to claim 1 or 2, **characterized in that** the cylinder (7) of the hydraulic cylinder (35) is connected to one of the body and wheel of the vehicle, and wherein the rod (12) connects the other one of the body and wheel of the vehicle to the piston (27).

4. Suspension device according to one of the claims 1 to 3, **characterized in that** the damping force generated by the first and second vibration damping unit (54,55) is set to a value larger than that of a minimum damping force generated by the first and second control valve (52,53).

5. Suspension device according to one of the claims 1 to 4, **characterized by** a valve housing (51) to which the first and second control valves (52,53) are attached.

6. Vehicle suspension device according to one of the claims 1 to 5, **characterized in that** the first and second vibration damping unit (54, 55) are respectively formed of a spring material and a plurality of disks different in outer diameter piled on an identical axial line.

7. Motorcycle on which the suspension device according to one of the claims 1 to 6 is mounted, comprising a steering handle axially supported by a motorcycle frame and a bridge fixed to an axial support shaft of the steering handle and connecting and supporting the outer tubes of the hydraulic cylinders provided on right and left hand sides, wherein the vibration damping unit is provided in at least one of the hydraulic cylinders.

## Patentansprüche

1. Aufhängungsvorrichtung für ein Fahrzeug, aufweisend einen hydraulischen Zylinder (35), montierbar zwischen einer Karosserie und einem Rad des Fahrzeuges, wobei der hydraulische Zylinder (35) einen Zylinder (7), einen Kolben (27), eingesetzt in den Zylinder (7), und eine Kolbenstange (12) aufweist, wobei eine erste Ölkammer (31) auf einer Gegen- Kolbenstangenseite des Kolbens (27) und eine zweite Ölkammer (32, 33) auf einer Kolbenstangenseite des Kolbens (27) in dem Zylinder (7) angeordnet ist, die erste Ölkammer (31) mit einem ersten Steuerventil (52) durch einen ersten Druckleitungskanal (66) und die zweite Ölkammer (32, 33) mit einem zweiten Steuerventil (53) durch einen zweiten Druckleitungskanal (69) verbunden ist, wobei das erste und zweite Steuerventil (52, 53) eine einstellbare Dämpfungskraft schafft und jeweils mit einer ersten und zweiten Schwingungsdämpfungseinheit (54, 55) versehen sind, **dadurch gekennzeichnet, dass**
die erste Schwingungsdämpfungseinheit (54) in einer Position stromab des ersten Steuerventils (52) vorgesehen ist und die zweite Schwingungsdämpfungseinheit (55) in einer Position stromab des zweiten Steuerventils (53) vorgesehen ist.

2. Aufhängungsvorrichtung nach Anspruch 1, **dadurch gekennzeichnet, dass** das erste und zweite Steuerventil (52, 53) jeweils konfiguriert ist, die Dämpfungskraft durch Verändern einer Größe von zugeführten Strom zu steuern.

3. Aufhängungsvorrichtung nach Anspruch 1 oder 2, **dadurch gekennzeichnet, dass** der Zylinder (7) des hydraulischen Zylinders (35) mit einem von der Karosserie oder dem Rad des Fahrzeuges verbunden ist und wobei die Kolbenstange (12) das andere von Karosserie oder Rad des Fahrzeuges mit dem Kolben (27) verbindet.

4. Aufhängungsvorrichtung nach einem der Ansprüche 1 bis 3, **dadurch gekennzeichnet, dass** die Dämpfungskraft, erzeugt durch die erste und zweite Schwingungsdämpfungseinheit (54, 55) auf einen Wert größer als der einer minimalen Dämpfungskraft, erzeugt durch das erste und zweite Steuerventil (52, 53), festgelegt wird.

5. Aufhängungsvorrichtung nach einem der Ansprüche 1 bis 4, **gekennzeichnet durch** ein Ventilgehäuse (51), mit dem das erste und zweite Steuerventil (52, 53) verbunden sind.

6. Aufhängungsvorrichtung nach einem der Ansprüche 1 bis 5, **dadurch gekennzeichnet, dass** die erste und zweite Schwingungsdämpfungseinheit (54, 55) jeweils aus einem Federmaterial und einer Mehrzahl von Scheiben, unterschiedlich im Außendurchmesser, gestapelt auf einer identischen axialen Linie, gebildet sind.

7. Motorrad, an dem die Aufhängungsvorrichtung nach einem der Ansprüche 1 bis 8 montiert ist, aufweisend eine Lenkhandgriff, axial gelagert durch einen Motorradrahmen und eine Brücke, befestigt an einer axialen Lagerwelle des Lenkhandgriffs und verbindend und lagernd die Außenrohre der hydraulischen Zylinder, vorgesehen auf der rechten und linken Seite, wobei die Schwingungsdämpfungseinheit in zumindest einem der hydraulischen Zylinder vorgesehen ist.

## Revendications

1. Dispositif de suspension pour un véhicule, comprenant un cylindre hydraulique (35) apte à être monté entre un corps et une roue du véhicule, étant précisé que le cylindre hydraulique (35) comprend un cylindre (7), un piston (27) inséré dans le cylindre (7), et une tige (12), qu'il est prévu une première chambre à huile (31) disposée sur un côté du piston (27) opposé à la tige, et une seconde chambre à huile (32, 33) sur le côté du piston (27) tourné vers la tige, dans le cylindre (7), et que la première chambre à huile (31) est reliée à une première soupape de commande (52) par un premier passage de transmission de pression (66) tandis que la seconde chambre à huile (32, 33) est reliée à une seconde soupape de commande (53) par un second passage de transmission de pression (69), les première et seconde soupapes de commande (52, 53) fournissant une force d'amortissement réglable et étant pourvues d'une première et d'une seconde unité d'amortissement de vibrations (54, 55), respectivement,
**caractérisé en ce que** la première unité d'amortissement de vibrations (54) est disposée en aval de la première soupape de commande (52), et la seconde unité d'amortissement de vibrations (55) est disposée en aval de la seconde soupape de commande (53).

2. Dispositif de suspension selon la revendication 1, **caractérisé en ce que** les première et seconde soupapes de commande (52, 53) sont conçues respectivement pour commander la force d'amortissement en modifiant une quantité de courant fourni.

3. Dispositif de suspension selon la revendication 1 ou 2, **caractérisé en ce que** le cylindre (7) du cylindre hydraulique (35) est relié au corps ou à la roue du véhicule, et la tige (12) relie la roue ou le corps du véhicule au piston (27).

4. Dispositif de suspension selon l'une des revendications 1 à 3, **caractérisé en ce que** la force d'amortissement produite par les première et seconde unités d'amortissement de vibrations (54, 55) est réglée à une valeur supérieure à celle d'une force d'amortissement minimale produite par les première et seconde soupapes de commande (52, 53).

5. Dispositif de suspension selon l'une des revendications 1 à 4, **caractérisé par** une enveloppe de soupape (51) à laquelle les première et seconde soupapes de commande (52, 53) sont fixées.

6. Dispositif de suspension de véhicule selon l'une des revendications 1 à 5, **caractérisé en ce que** les première et seconde unités d'amortissement de vibrations (54, 55) se composent respectivement d'un matériau à ressort et de plusieurs disques de diamètres extérieurs différents empilés sur une ligne axiale identique.

7. Motocycle sur lequel est monté le dispositif de suspension selon l'une des revendications 1 à 6, comprenant un guidon supporté axialement par un cadre de motocycle, et une traverse qui est fixée à une tige de support axiale du guidon et qui relie et supporte les tubes extérieurs des cylindres hydrauliques disposés sur les côtés droit et gauche, étant précisé que l'unité d'amortissement de vibrations est disposée sur l'un au moins des cylindres hydrauliques.
